Europäisches Patentamt

European Patent Office

Office européen des brevets

(11) Veröffentlichungsnummer: **0 408 888 B1**

(12) **EUROPÄISCHE PATENTSCHRIFT**

(45) Veröffentlichungstag der Patentschrift: 07.09.94

(51) Int. Cl.5: **C08K 9/08**, C08L 21/00

(21) Anmeldenummer: **90111039.5**

(22) Anmeldetag: **12.06.90**

(54) **Granulierte Kautschukchemikalien.**

(30) Priorität: **22.06.89 DE 3920411**

(43) Veröffentlichungstag der Anmeldung:
**23.01.91 Patentblatt 91/04**

(45) Bekanntmachung des Hinweises auf die
Patenterteilung:
**07.09.94 Patentblatt 94/36**

(84) Benannte Vertragsstaaten:
**AT BE CH DE ES FR GB GR IT LI LU NL SE**

(56) Entgegenhaltungen:
**EP-A- 0 121 699
FR-A- 2 139 409
GB-A- 2 053 927**

(73) Patentinhaber: **RHEIN-CHEMIE RHEINAU GmbH
Düsseldorfer Strasse 23-27
D-68219 Mannheim (DE)**

(72) Erfinder: **Gassner, Arnold
Auf der Friedenshöhe 8-10
D-6836 Oftersheim (DE)**
Erfinder: **Hein, Hilmar-Götz, Dr.
Goerdelerstrasse 23
D-6200 Wiesbaden (DE)**
Erfinder: **Schilling, August
Geheimrat-Schott-Strasse 36
D-6906 Leimen (DE)**
Erfinder: **Kleinknecht, Harald
Ernst-Reuter-Strasse 12
D-6508 Alzey (DE)**

(74) Vertreter: **Gremm, Joachim, Dr. et al
Bayer AG
Konzernverwaltung RP
Patente Konzern
D-51368 Leverkusen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der Kautschuk- und Kunststoffindustrie werden Chemikalien verschiedenster Art benötigt. Diese Chemikalien werden häufig pulverförmig verwendet. Dies hat verschiedene Nachteile. So bringen die Pulver Schwierigkeiten beim Einmischen, sie verteilen sich nicht sehr gut und erfordern relativ lange Mischzeiten. Darüberhinaus führen sie zu Belästigungen durch Staub und Geruch; dies ist besonders bei gesundheitsschädlichen Chemikalien sehr nachteilig.

Um diese Nachteile zu vermeiden, hat man unter Verwendung von etwa 2 bis 5 Gew.-% Ölen oder Latex Pulverpresslinge hergestellt. Diese Presslinge sind jedoch bei Lagerung im allgemeinen nicht stabil; entweder sie zerfallen wieder zu Pulver, was die vorerwähnten Nachteile mit sich bringt, oder sie verhärten und sind dann Anlaß für verstärkte Einmisch- und Verteilungsschwierigkeiten. Auch reicht die verwendete Öl- oder Polymermenge nicht zu einer ausreichenden Vordispergierung dieser Chemikalien aus. Es ist auch schon versucht worden, aus den Chemikalien unter Verwendung von Ölen Pasten herzustellen. Die Pasten vermeiden zwar die Belästigung durch Staub, doch sind sie relativ schwer dosierbar und benötigen gegenüber den Pulvern längere Einmischzeiten.

Es sind auch Mischungen aus Kautschuk, Polymeren, Chemikalien und gegebenenfalls Dispergatoren oder Weichmachern bekannt, die in Fellform vorliegen. Solche Felle sind nicht silierfähig und damit auch nicht automatisch dosierbar.

Die DE-OS 1 802 159 beschreibt Formaggregate, die im wesentlichen aus einem organischen Mischungsbestandteil für Gummi und einem ataktischen Polypropylen bestehen. Gemäß der US-PS 3 179 637 wird Polyethylen, gemäß der GB-PS 856 312 werden Polyvinylalkohol, Polyvinylmethylether oder Polyvinylacetat, gemäß der DDR-PS 61 864 wird Polyvinylether und gemäß der FR-PS 1 136 571 wird Polyisobutylen als Bindemittel zur Herstellung von Kautschukchemikaliengranulaten eingesetzt. Die Bindemittel der zitierten Literaturstellen sind thermoplastische Kunststoffe, die nicht in allen Fällen mit den Kautschuken, in die Kautschukchemikalien eingemischt werden, verträglich sind.

Desweiteren sind auch Produkte in Granulatform bekannt (z.B. aus DE-OS 2 123 214), bei denen Stoffgemische aus Polymeren, Ölen und Dispergatoren als Binder (für Kautschukchemikalien und andere übliche Zuschlagsstoffe) beschrieben werden. Auch werden z.B. in DE-OS 2 832 724 aufwendige mehrstufige Verfahren zur Umhüllung und staubfreien Einstellung von Kautschukchemikalien für andere Polymere mit Stoffgemischen beschrieben.

Die zuvor beschriebenen Binder weisen alle verschiedene Nachteile auf:
Besteht der Binder nur aus einer Substanz, so ist die universelle Verträglichkeit mit den üblichen Kautschuken und anderen Polymeren nicht gegeben. Die Dispergierfähigkeit für die pulverförmigen Chemikalien ist in vielen Fällen nicht ausreichend. Besteht der Binder aus Stoffgemischen, z.B. Polymeren Weichmachern, Dispergatoren sowie gegebenenfalls weiteren Zuschlägen, so kann die Einsatzbreite erweitert werden, doch sind auch diese Mehrstoffsysteme trotz der teilweisen aufwendigen Herstellung und des komplexen Aufbaus in vielen Kautschuken und anderen Polymeren nicht universell einsetzbar.

Gegenstand der Erfindung sind somit Zusatzstoffe, insbesondere Kautschukchemikalien in Form granulierter Mischungen mit einem schmelzbaren hochmolekularen Bindemittel, die dadurch gekennzeichnet sind, daß die Mischungen:

a) etwa 10 bis 80 Gew.-% Faktisse oder epoxidierte und anschließend vernetzte Ester aus mindestens zweiwertigen Alkoholen und ungesättigten Fettsäuren und

b) etwa 90 bis 20 Gew.-% Treibmittel, Vulkanisationsbeschleuniger, Vernetzungsmittel, Alterungsschutzmittel und/oder Aktivatoren

enthalten.

Diese Bindemittel sind druck-, aber nicht zugelastisch; sie nehmen nach Verformung spontan die ursprüngliche Form wieder an, erweichen aber bei Temperaturerhöhung und/oder Scherbeanspruchung.

Faktisse sind farblose oder farbige kautschukähnliche Stoffe, die durch Einwirkung von Schwefelchlorid (in der Kälte) oder Schwefel (in der Hitze) auf fette Öle (wie Rüböl, Trane) entstehen. Sie dienen im allgemeinen als Kautschukadditive und sind seit langem bekannt.

Epoxidierte und anschließend vernetzte Ester aus mindestens zweiwertigen, vorzugsweise mindestens dreiwertigen Alkoholen und ungesättigten Fettsäuren, insbesondere den Glyceriden solcher Fettsäuren im Sinne der Erfindung sind in der Europäischen Patentschrift 121 699 beschrieben.

Sie können erhalten werden, indem man entsprechende Ester zunächst expodiert und anschließend mittels geeigneter, mit Epoxid-Gruppen reagierenden mehrfunktionellen Vernetzungsmitteln, wie Polycarbonsäuren, Polyaminen, Polyhydroxyverbindungen oder Polythiolverbindungen vernetzt. Geeignete Di- oder Polycarbonsäuren sind z.B. Bernsteinsäure, Phthalsäure, Tere- und Isophthalsäure und Trimellithsäure. Geeignete Polyamine sind z.B. Ethylendiamin, Diethylentriamin, Hexamethylendiamin und Phenylendiamine.

2

Geeignete Polyhydroxyverbindungen sind z.B. Glycerin, Glykol, Diglykol, Pentaerythrit, Hydrochinon, Pyrogallol, und mit Polyalkoholen veresterte Hydroxycarbonsäuren. Geeignete Polythiolverbindungen sind z.B. Ethanthiol-1,2, Trimethylolpropan-tri-3-mercaptopropionat, Pentaerythrit-tetra-3-mercaptopropionat und Dithiophosphorsäuren. Geeignete Vernetzungsmittel können auch verschiedene funktionelle Gruppen in einem Molekül enthalten.

Geeignete, mindestens zweiwertige, vorzugsweise dreiwertige Alkohole sind z.B. Glycerin, Glykol, Pentaerythrit, Trimethylolpropan und/oder Sorbit. Bevorzugte Ester sind die natürlichen Triglyceride ungesättigter Fettsäuren, die sogenannten fetten Öle, beispielsweise Rüböl, Leinöl, Sojaöl und Fischöl. Bei Verwendung von zweiwertigen Alkoholen werden vorzugsweise mindestens trifunktionelle Vernetzungsmittel eingesetzt.

Die Vernetzungsmittel werden mit den epoxidierten fetten Öle, die Epoxidgehalte von 1,5 bis 15 Gew.-% (Gew.-% Sauerstoff bezogen auf epoxidiertes fettes Öl), vorzugsweise 4 bis 8 Gew.-%, aufweisen, in Dosierungen von 3 bis 50 Gew.-% bei Temperaturen von 80 bis 180° C, vorzugsweise bei 100 bis 150° C, zur Reaktion gebracht, wobei feste und halbfeste Polymere erhalten werden.

Die Dosierung des Vernetzungsmittels wird so bemessen, daß auf eine Epoxidgruppe etwa eine vernetzungsfähige Gruppe des Vernetzungsmittels kommt.

Bei nicht vollständiger stöchiometrischer Umsetzung soll das Vernetzungsprodukt vorzugsweise noch Epoxidgruppen enthalten.

Bevorzugte Vernetzungsmittel sind Dicarbonsäuren.

Die erfindungsgemäßen granulierten Gemische können auf verschiedenen in der Kautschuk- und Kunststoffindustrie üblichen Aggregaten bei geringer Temperaturbelastung hergestellt werden; geeignet sind z.B. Innenmischer, Schnellmischer, Kneter mit und ohne Stempel, Mischwalzen. Die Formgebung erfolgt ebenfalls mit in der Kautschuk- und Kunststoffindustrie gebräuchlichen Maschinen durch Austragung über eine Lochplatte mit einem Extruder oder durch Kompaktoren, Walzengranulatoren.

Das polymere Bindermaterial wird im Mischaggregat vorgelegt. Der Mischer wird eingeschaltet und das Bindermaterial kurz aufgeschlossen, dann werden die Chemikalien oder das Chemikaliengemisch in Teilmengen dem Binder zugegeben. Nach wenigen Minuten liegt ein homogenes Gemisch des Binders mit den Chemikalien vor. Das Material kann nun direkt über eine Lochplatte ausgeformt werden, oder es wird in ein Formgebungsaggregat überführt und dort in die gewünschte Form gebracht.

Die erfindungsgemäßen Mischungen können aus verschieden geformten Teilchen bestehen, z.B. aus zylinderförmigen, aus kubischen Teilchen oder aus Fellen. Es können grundsätzlich alle in Kautschuken und in anderen Polymeren verwendeten Chemikalien in dieser Form angewendet werden; insbesondere die, bei denen Einmisch- und/oder Verteilungsschwierigkeiten oder Belästigungen durch Staub und/oder Geruch gegeben sind.

Die in Granulatform verwendbaren Chemikalien sind Treibmittel wie Natriumbicarbonat, Vulkanisationsbeschleuniger wie Hexamethylentetramin, Tetramethylthiuramidsulfid, Diethylthioharnstoff, Vernetzungsmittel wie Schwefel, Alterungsschutzmittel wie N-isopropy-N′-phenyl-p-phenyldiamin und Aktivatoren der verschiedensten Art wie Bleimennige, Magnesiumoxid und Zinkoxid Es ist möglich, solche Granulate sowohl mit nur einer als auch mehreren Chemikalien herzustellen und zu verwenden.

Die erfindungsgemäß verwendeten Mischungen in Granulatform sind nicht klebrig, sondern gut rieselfähig, daher können sie siliert und automatisch dosiert werden. Darüber hinaus zeigen sie eine gute Verträglichkeit, Einmisch- und Verteilbarkeit in Kautschuken und anderen Polymeren.

## Ausführungsbeispiele:

### A. Granulierte Mischungen

| | | | |
|---|---|---|---|
| 1. | Epoxidierter vernetzter Ester [1] | 30 Gew.-Teile | |
| | Ethylenthioharnstoff (ETU) | 70 " | " |
| 2. | Epoxidierter vernetzter Ester [1] | 30 " | " |
| | N-isopropyl-N'-phenyl-p-phenylendiamin (IPPD) | 70 " | " |
| 3. | Epoxidierter vernetzter Ester [1] | 20 " | " |
| | Bleimennige ($Pb_3O_4$) | 80 " | " |
| 4. | Epoxidierter vernetzter Ester [1] | 30 " | " |
| | Tetramethylthiuramdisulfid (TMTD) | 70 " | " |
| 5. | Epoxidierter vernetzter Ester [1] | 30 " | " |
| | Mahlschwefel (S) | 70 " | " |
| 6. | Epoxidierter vernetzter Ester [1] | 30 " | " |
| | 2.2-Dibenzothiacyldisulfid (MBTS) | 70 " | " |
| 7. | Epoxidierter vernetzter Ester [1] | 50 " | " |
| | Magnesiumoxid (MgO) | 50 " | " |
| 8. | Epoxidierter vernetzter Ester [1] | 50 " | " |
| | Azodicarbonamid | 50 " | " |
| 9. | Epoxidierter vernetzter Ester [1] | 30 " | " |
| | n-Dihydroxybenzol | 70 " | " |

[1] Bei dem Binder handelt es sich in allen Beispielen um das gleiche Produkt, ein mit Dicarbonsäure dreidimensional vernetztes Gemisch aus epoxidiertem Rüböl und Methylestern (Benzinextrakt % : 32,4), analog EP-A 0 121 699 hergestellt.

Alle in den Beispielen 1 - 9 aufgeführten Produkte lassen sich nach dem im folgenden beschriebenen Fertigungsbeispiel herstellen. Die in den Ausführungsbeispielen genannten Produkte liegen in der Endform als Zylinder-Granulate mit 5 - 8 mm Durchmesser und 5 - 10 mm Länge vor.

Fertigungsbeispiel:

Der Binder (epoxidierter vernetzter Ester) und die Chemikalie oder das Chemikaliengemisch werden entsprechend den vorgegebenen Gewichtsverhältnissen abgewogen und dann gemischt.

|                                           |                 | Einwaage |
|-------------------------------------------|-----------------|----------|
| Epoxidierter vernetzter Ester (Binder)    | 30 Gew.-Teile   | 18 kg    |
| Tetramethylthiuramdi- sulfid (TMTD)       | 70 Gew.-Teile   | 42 kg    |

- Mischaggregat:
  Stempelkneter (50 l)          bei 50 U/min.

- Mischungsablauf:  0          Binder

  30 sec.     TMTD

  360 sec.    Auswerfen der Mischung

- Massetemperatur bei Auswurf:  70° C

- Aussehen: weiße, kompakte Masse.

Die erhaltene Mischung wurde sofort einem Extruder Zugeführt und durch eine Lochplatte (∅ Einzelbohrung 5 mm) extrudiert und mit einem Abschlagmesser granuliert.

|                              | Zone 1  | 2       | 3       | Kopf    |
|------------------------------|---------|---------|---------|---------|
| Temperaturprofil Extruder:   | 45 °C   | 50 °C   | 55 °C   | 60 °C   |

| Aussehen des Fertigproduktes: | weißes Zylindergranulat ∅ 6 mm Länge 6 - 8 mm |
|-------------------------------|------------------------------------------------|

B. Prüfungen

Die erfindungsgemäßen Granulate gemäß Beispiel 4, 5 und 6 wurden im Vergleich zu handelsüblichen Pulvern und Granulatprodukten (wirkstoffgleich) in eine helle Nitrilbutadienkautschuk (NBR)-Qualität eingemischt. (Zusammensetzung vergleiche Beispiel 1 - NBR-Mischung).

Die Vorteile der polymergebundenen vordispergierten Chemikalien gegenüber anderen Lieferformen sind auch hier festzustellen: leichte, saubere Handhabung, gute Arbeitshygiene, kürzere Aufnahmezeiten, gute Verteilung der Chemikalien in der Kautschukmischung.

Die Prüfmischungen wurden in einem Laborkneter hergestellt. Die erfindungsgemäßen und die Vergleichsprodukte wurden jeweils unter gleichen Bedingungen auf einem Walzwerk gemischt.

Aus den Mischungen wurden in einer Etagenpresse bei 150° C/20 Min. Prüfplatten von 2 mm und 6 mm Dicke hergestellt. Die Sofortprüfungen nach DIN (s. Tabelle 1.1) zeigen praktisch keine Unterschiede zwischen den Vergleichsmischungen.

Sowohl nach einer Heißluftalterung von 7 Tagen / 100° C als auch nach einer Quellung der Mischungen A - C von 3 Tagen / 100° C in ASTM-Öl Nr. 3 stellt man deutliche Vorteile für die Mischung C mit den erfindungsgemäßen Granulaten fest.

Die Mischung mit den erfindungsgemäß hergestellten Granulaten Beispiel Nr. 4, 5 und 6, TMTD 70 / S 70 / MBTS 70, zeigen höhere Reißfestigkeit und Reißdehnung bei geringerer Quellung als die Vergleichmischungen. Einzelheiten geben die Tabelle 1 und 1.1 wieder.

Tabelle 1

Beispiel 1: NBR-Mischung:

(Gew.-Teile)

|  |  | A | B | C |
|---|---|---|---|---|
| 1. | Mischstufe: *) |  |  |  |
|  | NBR (ACN 33 %) | 100 | = | = |
|  | Kieselsäure Füllstoff | 15 | = | = |
|  | Dioctylsebazat | 5 | = | = |
|  | Stearinsäure | 1 | = | = |
|  | Zinkoxid | 5 | = | = |
|  | Ozonschutzwachs | 1,5 | = | = |
|  | Alterungsschutzmittel | 1,0 | = | = |

| 2. | Mischstufe: Einmischen der Vernetzungssysteme: **) | | | |
|---|---|---|---|---|
|  | Tetramethylthiuramtetra-sulfid (TMTD) 2 % Öl gecoated | 2,5 | - | - |
|  | Merkaptobenzothiazol-disulf (MBTS) 2 % Öl gecoated | 2,0 | = | = |
|  | Mahlschwefel (S) | 0,3 | = | = |
|  | Granulat TMTD (70 %) +) | - | 3,57 | - |
|  | Granulat MBTS (70 %) +) | - | 2,86 | - |
|  | Granulat S (80 %) +) | - | 0,375 | - |
|  | Prod.Bsp.Nr.4 (TMTD-70%) ++) | - | - | 3,57 |
|  | Prod.Bsp.Nr.6 (MBTS-70%) ++) | - | - | 2,57 |
|  | Prod.Bsp.Nr.5 (S - 70%) ++) | - | - | 0,43 |

*) Die Herstellung der Prüfmischung erfolgte in einem 1 1-Laborkneter.

**) Das Einmischen der jeweiligen Vernetzungssysteme A, B und C in die Prüfmischung erfolgte auf einem Laborwalzwerk ø 200 mm, Länge 350 mm, Friktion 1 : 1,25 bei 70°C.

+) Handelsübliche polymergebundene Chemikaliengranulate, Binder ist ein Gemisch aus Ethylenpropylenterpolymer (EPDM)/Ethylenvinylacetat (EVA) + Mineralöl und Dispergatoren, analog Deutsches Patent 2 123 214.

++) Erfindungsgemäß gefertigte Produkte.

6

<u>Tabelle 1.1:</u>  Vulkanisatprüfwerte der Mischungen
A, B und C:

|  | | A | B | C |
|---|---|---|---|---|
| **Vulkanisation 20 Min./150° C:** | | | | |
| Härte [1] | (ShA) | 48 | 48 | 49 |
| Spannungswert 100 % [2] | (MPa) | 1,3 | 1,3 | 1,3 |
| Zugfestigkeit [2] | (MPa) | 13,6 | 12,6 | 12,8 |
| Reißdehnung [2] | (%) | 600 | 610 | 620 |
| **Alterung 7 Tage / 100° C [3] im Wärmeschrank:** | | | | |
| Härte [1] | (ShA) | 50 | 50 | 51 |
| Spannungswert 100 % | (MPa) | 1,5 | 1,4 | 1,5 |
| Zugfestigkeit | (MPa) | 7,9 | 11,5 | 13,1 |
| Reißdehnung | (%) | 500 | 530 | 580 |
| **Quellung 3 Tage / 100° C - ASTM Öl Nr. 3 [4]** | | | | |
| Härte vor | | 48 | 48 | 49 |
| Härte nach | | 46 | 44 | 47 |
| Spannungswert 100° C | | 1,3 | 1,2 | 1,3 |
| Zugfestigkeit | | 5,7 | 7,2 | 8,5 |
| Reißdehnung | | 460 | 480 | 510 |
| Gewichtsänderung | | 10,3 | 11,3 | 8,8 |
| Volumenänderung | | 13,1 | 15,7 | 9,4 |

[1] nach DIN 53 505 an Klappen, Dicke 6 mm.
[2] nach DIN 53 504 am S II Stab, aus Prüfplatten, Dicke 2 mm.
[3] nach DIN 53 508 am S II Stab, aus Prüfplatten, Dicke 2 mm.
[4] nach DIN 53 521 am S II Stab, aus Prüfplatten, Dicke 2 mm.

Beispiel 2:

Vergleich der erfindungsgemäßen Granulate Beispiel 1 und 3, mit
a) Granulaten, deren Binder auf Basis Epichlorhydrin-Copolymer-Kautschuk (ECO) und Weichmachern sowie mit

b) Granulaten, deren Binder aus Ethylenpropylenterpolymer (EPDM) gemischt mit Ethylenvinylacetat polymer (EVA) plus Mineralöl und Dispergatoren (Fettsäurederivate)

gebildet wird, als Vernetzungsmittel für eine rußgefüllte Kautschukqualität mit Epichlorhydrincopolymer (ECO) und Epichlorhydrinpolymer (CO) als Polymerbasis. Einzelheiten siehe Tabelle 2.

Die Herstellung der ECO/CO-Prüfmischung (1. Mischstufe) erfolgte auf einem 1 Liter-Laborkneter.

Die Aufmischung der jeweiligen Vernetzungssysteme A / B / C erfolgte in einer 2. Mischstufe - unter gleichen Bedingungen - auf einem Laborwalzwerk.

Die Fertigmischungen wurden in einer Etagenpresse zu Platten verpresst und 30 Min. bei 175° C ausvulkanisiert.

Aus den Prüfplatten wurden dann die in den entsprechenden DIN-Normen beschriebenen Prüfkörper für die mechanisch-technologischen Prüfungen ausgestanzt. Einzelheiten siehe Tabelle 2.1.

Bei der vergleichenden Prüfung der Vulkanisate der ECO/CO-Mischungen A / B / C ergeben sich wieder deutlich günstigere Werte für die Mischung C, hergestellt mit den erfindungsgemäß gefertigten Produkten.

Die Zugfestigkeit und Reißdehnung ist günstiger als bei den Mischungen A und B mit den Vergleichsprodukten.

Die bessere Eignung der Granulate mit dem erfindungsgemäßen Binder gegenüber den Vergleichsprodukten in Spezialpolymeren wie ECO, CO belegen auch die günstigeren Werte bei der Ermittlung der Gewicht- und Volumenänderung im ASTM Öl Nr. 3 als Quellmedium. Einzelheiten hierzu siehe Tabellen 2 und 2.1.

<u>Tabelle 2</u>

<u>Beispiel 2: ECO/CO-Mischung:</u>                                    (Gew.-Teile)

| | A | B | C |
|---|---|---|---|
| **1. Mischstufe:** | | | |
| Epichlorhydrin-Copolymer (ECO) | 60 | = | = |
| Epichlorhydrinpolymer (CO) | 40 | = | = |
| Merkaptobenzimidazol | 1,0 | = | = |
| Nickeldibutyldithiocarbonat | 1,5 | = | = |
| Ruß N 330 | 15 | = | = |
| Ruß N 550 | 29 | = | = |

| | A | B | C |
|---|---|---|---|
| **2. Mischstufe:** | | | |
| Granulat ETU (70 %) [*] Polymerbinder EPDM/EVA | 1,5 | - | - |
| Granulat $Pb_3O_4$ (80 %) [*] Polymerbinder EPDM/EVA | 6,0 | = | = |
| Granulat ETU (70 %) [+] Polymerbinder ECO | - | 1,5 | - |
| Granulat $Pb_3O_4$ (80 %) [+] Polymerbinder ECO | - | 6,0 | - |
| Beispiel Nr.1 (ETU-70%)[**] | - | - | 1,5 |
| Beispiel Nr.3 ($Pb_3O_4$-80%)[**] | - | - | 6,0 |

[*]   Handelsübliche Produkte mit EPDM/EVA plus Mineralöl und Dispergatoren, analog Deutsches Patent 2 123 214,

[+]   Handelsübliche Produkte mit ECO plus Dioctylphthalat (DOP),

[**]  erfindungsgemäß hergestellte Produkte.

9

<u>Tabelle 2,1:</u>

<u>Beispiel 2: ECO/CO-Mischung: Vulkanisatprüfung</u>

|  |  | A | B | C |
|---|---|---|---|---|
| <u>Vulkanisation 30 Min,/175° C:</u> |  |  |  |  |
| Härte [1] | (ShA) | 68 | 66 | 67 |
| Weiterreißwiderstand[2] (W.W/Cresent) | (N/mm) | 64 | 65 | 71 |
| Spannungswert 100 % [3] | (MPa) | 4,0 | 3,7 | 3,8 |
| Zugfestigkeit [3] | (MPa) | 12,9 | 13,0 | 15,9 |
| Reißdehnung [3] | (%) | 330 | 350 | 480 |
| RdV 24 Stunden/ 70° C[4] | (%) | 4 | 6 | 7 |
| /100° C[4] | (%) | 9 | 8 | 11 |
| /150° C[4] | (%) | 46 | 39 | 40 |

<u>Alterung 3 Tage / 150° C[5]  im Wärmeschrank:</u>

|  |  | A | B | C |
|---|---|---|---|---|
| Härte | (ShA) | 79 | 79 | 80 |
| W.W/Cresent | (N/mm) | 44 | 50 | 56 |
| Spannungswert 100 % | (MPa) | 8,2 | 8,2 | 8,0 |
| Zugfestigkeit | (MPa) | 10,5 | 11,0 | 13,5 |
| Reißdehnung | (%) | 120 | 130 | 160 |

<u>Lagerung 3 Tage / 150° C - ASTM Öl Nr. 3[6]</u>

|  |  | A | B | C |
|---|---|---|---|---|
| Härte | (ShA) | 72 | 71 | 71 |
| Spannungswert 100 % | (MPa) | 6,3 | 6,8 | 6,8 |
| Zugfestigkeit | (MPa) | 10,1 | 12,8 | 14,5 |
| Reißdehnung | (%) | 140 | 160 | 190 |
| Gewichtsänderung | (%) | 8,0 | 6,5 | 5,1 |
| Volumenänderung | (%) | 12,1 | 8,7 | 8,6 |

[1]    nach DIN 53 505 an Klappen, Dicke 6 mm
[2]    nach ASTM 624 'Die B'
[3]    nach DIN 53 517, Normprobekörper A
[4]    nach DIN 53 504 am S II Stab
[5]    nach DIN 53 508 am S II Stab
[6]    nach DIN 53 521 am S II Stab

**Patentansprüche**

1.   Kautschukchemikalien in Form homogener Mischungen in Granulatform eines erweichenden hochmolekularen Bindemittels mit in Granulatform verwendbaren Treibmittel, Vulkanisationsbeschleuniger, Vernetzer, Alterungsschutz mittel und/oder Aktivatoren, gekennzeichnet durch einen Gehalt von

a) etwa 10 bis 80 Gew.-% Faktisse oder epoxidierte und anschließend vernetzte Ester aus mindestens zweiwertigen Alkoholen und ungesättigten Fettsäuren und

b) etwa 90 bis 20 Gew.-% Treibmittel, Vulkanisationsbeschleuniger, Vernetzungsmittel, Alterungsschutzmittel und/oder Aktivatoren.

## Claims

**1.** Rubber chemicals in the form of homogeneous mixtures in pellet form of a softening, high molecular weight binder with blowing agents, vulcanisation accelerators, vulcanising agents, antioxidants and/or activators which are usable in pellet form, characterised in that they contain

a) approximately 10 to 80 wt.% of factice or epoxidised and subsequently vulcanised esters of at least dihydric alcohols and unsaturated fatty acids and

b) approximately 90 to 20 wt.% of blowing agents, vulcanisation accelerators, vulcanising agents, antioxidants and/or activators.

## Revendications

**1.** Produits chimiques pour les caoutchoucs sous forme de mélanges homogènes, à l'état de granulés, d'un liant à haut poids moléculaire capable de se ramollir avec des agents porogènes, des activateurs de vulcanisation et des agents réticulants, des agents de protection contre le vieillissement et/ou des activateurs utilisables sous la forme de granulés, qui se caractérisent en ce qu'ils contiennent :

a) d'environ 10 à 80% en poids de factices ou d'esters époxydés et réticulés d'alcools au moins divalents et d'acides gras insaturés, et

b) d'environ 90 à 20% d'agents porogènes, d'accélérateurs de vulcanisation, d'agents réticulants, d'agents de protection contre le vieillissement et/ou d'activateurs.